# EUROPÄISCHE PATENTSCHRIFT

(11) **EP 2 103 473 B1**
(45) Veröffentlichungstag und Bekanntmachung des Hinweises auf die Patenterteilung: **05.06.2013**
(21) Anmeldenummer: 09002389.6
(22) Anmeldetag: 20.02.2009
(51) Int. Cl.: B60K 15/035, F01N 3/20

(54) **Belüftung für einen Reduktionsmittelbehälter**
Ventilation system for a reduction agent container
Aération pour un récipient de moyen de réduction

(30) Priorität: 14.03.2008 DE 102008014363
(43) Veröffentlichungstag der Anmeldung: 23.09.2009
(73) Patentinhaber: Audi AG, 85045 Ingolstadt (DE)
(72) Erfinder: Revink, Ingo, 85049 Ingolstadt (DE)
(74) Vertreter: Lehle, Josef

(56) Entgegenhaltungen:
- DE-A1- 10 214 556
- DE-A1-102006 027 487
- JP-A- 2005 291 086
- JP-A- 2006 009 606

## Beschreibung

Die Erfindung betrifft eine Belüftung für einen Reduktionsmittelbehälter in einem Kraftfahrzeug.

Derartige Belüftungen werden in Kraftfahrzeugen zum Ausgleichen des Innendrucks eines Reduktionsmittelbehälters verwendet.

### Stand der Technik

Die DE 10 2006 027 487 A1 zeigt einen Fahrzeugtank für eine wässrige Harnstofflösung, in dem ein Innenbehälter angeordnet ist. Eine Pumpe fördert die Harnstofflösung sowohl aus dem Tank, als auch dem Innenbehälter des Tanks zum Abgasstrang einer Brennkraftmaschine. Die Belüftung erfolgt über ein Druckregelventil, welches sowohl mit dem Innenbehälter, als auch der Auslassseite der Pumpe in Verbindung steht. Dem Druckregelventil kann ein Aktivkohlefilter zugeordnet sein, um die Geruchsemission zu reduzieren.
Nachteilig ist, dass für den mit Harnstofflösung befüllten Fahrzeugtank eine eigene Belüftungseinrichtung in Form eines Druckregelventils mit optional angeschlossenem Aktivkohlefilter vorgesehen ist, welche zusätzliches Gewicht im Fahrzeug und erhöhte Produktionskosten nach sich zieht.

Die gattungsgemäße DE 102 14 556 A1 zeigt ein Kraftstoff- und Reduktionsmittelbetankungssystem, welches einen Tank für Kraftstoff und einen Tank für Reduktionsmittel aufweist. Beide Tanks können von außen mit den zugehörigen Flüssigkeiten befüllt werden und verfügen über eigene Einrichtungen zur Belüftung, wobei die Belüftung des Reduktionsmitteltanks als Kombinationsentlüftungsventil ausgebildet ist.
Nachteilig ist, dass die Dämpfe des Reduktionsmittels ungehindert aus dem Reduktionsmitteltank durch das Kombinationsentlüftungsventil in die Umgebung strömen können und somit zu einer nicht unerheblichen Geruchsbelästigung führen.

Die DE 103 37 572 A1 zeigt einen Vorratstank für Betriebs- und/oder Hilfsstoffe einer Brennkraftmaschine und/oder dieser zugeordneten bzw. nachgeschalteten Einrichtungen, der kegel- bzw. pyramidenförmig ausgebildet ist und über eine Entnahmeöffnung am Grund des Vorratstanks verfügt. Im Vorratstank ist weiterhin eine Heizeinrichtung zum Beheizen des Mediums vorgesehen. An der Spitze des Vorratstanks befindet sich eine Belüftungsöffnung.
Nachteilig ist, dass die Dämpfe des im Vorratstank befindlichen Mediums durch die Belüftungsöffnung an die Umgebung abgegeben werden, was eine starke Geruchsbelästigung darstellt und im Falle von Kraftstoffdämpfen auch eine Explosionsgefahr birgt.

Aufgabe der nachfolgenden Erfindung ist es daher eine Belüftung für einen Reduktionsmittelbehälter bereitzustellen, die möglichst kostengünstig und mit wenig Zusatzgewicht in ein Fahrzeug integriert werden kann, sowie zu keiner Geruchsbelästigung in der Umgebung führt.

Diese Aufgabe wird durch die Merkmale des Patentanspruchs 1 gelöst.

Belüftung für einen Reduktionsmittelbehälter, aufweisend einen ersten Reduktionsmittelbehälter, der mit einer ersten Reduktionsmitteleinfüllöffnung versehen ist, einen Kraftstoffbehälter, der mit einer Kraftstoffeinfüllöffnung und einer Belüftungseinrichtung versehen ist, sowie eine erste Leitung, durch die der erste Reduktionsmittelbehälter mit dem Kraftstoffbehälter in Verbindung steht.
Indem die erste Leitung den ersten Reduktionsmittelbehälter mit dem Kraftstoffbehälter verbindet, ist es möglich, dass beide Behälter untereinander einen Druckausgleich und einen Gasaustausch bewerkstelligen können. Dadurch ist es möglich, dass der erste Reduktionsmittelbehälter in den Kraftstoffbehälter belüftet werden kann und somit ohne eine eigene Belüftungseinrichtung auskommen kann. Dies spart Gewicht, als auch Kosten in nicht unerheblichem Umfang. Es wird lediglich eine erste Leitung benötigt, die beispielsweise als Kunststoffschlauch ausgeführt werden kann und dadurch kaum zusätzliches Gewicht mit sich bringt und nur wenig Bauraum beansprucht. Die Belüftung des Reduktionsmittelbehälters erfolgt über die ohnehin vorhandene Belüftungseinrichtung des Kraftstoffbehälters. Diese braucht nicht an die neuen Anforderungen konstruktiv angepasst werden, da der erste Reduktionsmittelbehälter in den Kraftstoffbehältervolumen belüftet und nicht direkt mit der Belüftungseinrichtung in Verbindung steht, was eine Integration einer erfindungsgemäßen Belüftung für einen Reduktionsmittelbehälter in bestehende Systeme sehr einfach und kostengünstig macht. Weiterhin wird durch die Belüftungseinrichtung zuverlässig eine Geruchsbelästigung für die Umgebung durch austretende Gase vermieden, da die Belüftungseinrichtung lediglich einen Druckausgleich vornimmt, ohne ständig übelriechende Gase ausdampfen zu lassen.

In einer bevorzugten Ausführung weist der erste Reduktionsmittelbehälter eine Reduktionsmittelfördereinrichtung auf.

In einer bevorzugten Ausführung weist der Kraftstoffbehälter eine Kraftstofffördereinrichtung auf.

In einer bevorzugten Ausführung ist eine zweite Leitung vorgesehen, durch die der erste Reduktionsmittelbehälter mit dem Kraftstoffbehälter in Verbindung steht, wobei ein Fluidstrom aus dem jeweiligen Behälter nur eine der beiden Leitungen passieren kann.

In einer bevorzugten Ausführung ist ein zweiter Reduktionsmittelbehälter angeordnet, welcher über eine zweite Reduktionsmitteleinfüllöffnung und eine zweite Reduktionsmittelfördereinrichtung verfügt und durch eine dritte Leitung mit dem Kraftstoffbehälter verbunden ist. Dadurch ist es möglich ein System aus aktiven und passiven Reduktionsmittelbehälter aufzubauen, wobei der aktive Reduktionsmittelbehälter der beheizbare erste Reduktionsmittelbehälter ist und der passive Reduktionsmittelbehälter der unbeheizte, zweite Reduktionsmittelbehälter ist.

In einer bevorzugten Ausführung verfügt die erste und/oder die zweite und/oder die dritte Leitung über ein erstes Ventil.

In einer bevorzugten Ausführung ist das erste Ventil als Rückschlagventil ausgebildet ist.

In einer bevorzugten Ausführung ist das erste Ventil für Flüssigkeiten unpassierbar, bevorzugt als Roll-Over-Ventil und besonders bevorzugt als Schwimer-Roll-Over-Ventil, ausgebildet. Dadurch wird verhindert, dass bei einer Überfüllung eines der beiden Behälter Flüssigkeit durch die Leitungen in den jeweils anderen Behälter überfließen kann, was eine unerwünschte Vermischung der beiden Flüssigkeiten zur Folge hätte.

In einer bevorzugten Ausführung sind die erste und die zweite Reduktionsmitteleinfüllöffnung gleichzeitig befüllbar. Das erleichtert das Befüllen des Reduktionsmittelbehälters erheblich, da durch eine einzige Öffnung beide Reduktionsmittelbehälter zur gleichen Zeit befüllbar sind.

In einer bevorzugten Ausführung wird die Belüftungseinrichtung durch ein nahe am Kraftstoffbehälter liegendes zweites Ventil, bevorzugt ein für Flüssigkeiten unpassierbares Ventil und besonders bevorzugt ein Schwimmer-Roll-Over-Ventil gebiidet.

In einer bevorzugten Ausführung wird die Belüftungseinrichtung durch ein drittes Ventil, bevorzugt ein Rückschlagventil und besonders bevorzugt ein Roll-Over-Ventil gebildet, welches an einer Belüftungsleitung angeordnet ist.

In einer bevorzugten Ausführung wird die Belüftungseinrichtung durch ein nahe am Kraftstoffbehälter liegendes zweites Ventil, bevorzugt ein für Flüssigkeiten unpassierbares Ventil und besonders bevorzugt ein Schwimmer-Roll-Over-Ventil gebildet, welches über eine Belüftungsleitung mit einem dritten Ventil, bevorzugt ein Rückschlagventil und besonders bevorzugt ein Roll-Over-Ventil, in Verbindung steht. Dadurch wird ein Austreten von Kraftstoff aus dem Kraftstoffbehälter durch die Belüftungseinrichtung wirksam verhindert. Weiterhin ist es auch nicht möglich, dass Fremdkörper oder Gase durch die Belüftungseinrichtung in den Kraftstoffbehälter eindringen können.

In einer bevorzugten Ausführung ist an Stelle eines der ersten Ventile ein Tauchrohr angeordnet. Dies ermöglicht den Verzicht auf ein Kosten verursachendes Ventil und stellt gleichzeitig einen ausreichend hohen Schutz gegen unerwünschtes passieren von Flüssigkeit dar.

In einer bevorzugten Ausführung weist der erste Reduktionsmittelbehälter, der zweite Reduktionsmittelbehälter und der Kraftstoffbehälter ein Gasvolumen und ein Flüssigkeitsvolumen auf.

In einer bevorzugten Ausführung ist das erste Ventil im Gasvolumen angeordnet.

In einer bevorzugten Ausführung ist das Tauchrohr im Flüssigkeitsvolumen angeordnet.

In einer bevorzugten Ausführung verfügt der erste Reduktionsmittelbehälter über eine Heizeinrichtung. Dadurch ist es möglich das Reduktionsmittel auch bei niedrigen Temperaturen fließfähig zu halten.

In einer bevorzugten Ausführung ist der Reduktionsmittelbehälter mit Harnstofflösung, vorzugsweise 32,5 % -iger Harnstofflösung, befüllt.

In einer bevorzugten Ausführung ist der Kraftstoffbehälter mit Diesel befüllt.

### Ausführungsbeispiel

Weitere Einzelheiten, Merkmale und Vorteile der Erfindung ergeben sich aus der nachstehenden Beschreibung eines bevorzugten Ausführungsbeispiels unter Bezugnahme auf die Zeichnungen.

### Darin zeigen:

**Fig. 1** eine Belüftung für einen Reduktionsmittelbehälter mit einer Verbindungsleitung;
**Fig. 2** eine Belüftung für einen Reduktionsmittelbehälter mit zwei Verbindungsleitungen;
**Fig. 3** eine Belüftung für zwei Reduktionsmittelbehälter;
**Fig. 4** eine Schnittansicht des zweiten Ventils;
**Fig. 5** eine Schnittansicht des dritten Ventils;

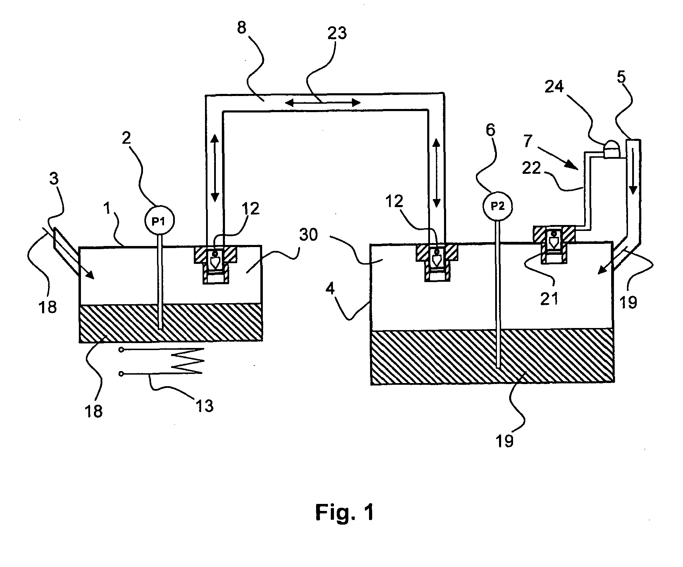

Gemäß **Fig. 1** hat eine Belüftung für einen Reduktionsmittelbehälter einen ersten Reduktionsmittelbehälter 1, der über eine erste Reduktionsmitteleinfüllöffnung 3 mit Reduktionsmittel 18, vorzugsweise mit Harnstoff befüllt werden kann. Durch eine Reduktionsmittelfördereinrichtung 2 kann Harnstoff 18 aus dem ersten Reduktionsmittelbehälter 1 zur weiteren Verwendung entnommen werden. Weiterhin verfügt der erste Reduktionsmittelbehälter 1 über eine Heizeinrichtung 13, die bei niedrigen Temperaturen ein Einfrieren des Harnstoffs 18 verhindert.
Ein Kraftstoffbehälter 1, der mit Kraftstoff 19, vorzugsweise Diesel befüllt ist, verfügt über eine Kraftstoffeinfüllöffnung 5 zum Befüllen des Kraftstoffbehälters 1 mit Diesel 19. Eine Kraftstofffördereinrichtung 6 ist zur Entnahme des Diesels 19 aus dem Kraftstoffbehälter 4 vorgesehen. Am Kraftstoffbehälter 4 ist weiterhin eine Belüftungseinrichtung 7 angeordnet, welche unter Anderem durch ein nahe am Kraftstoffbehälter 4 angeordnetes Schwimmer-Roll-Over-Ventil 21 gebildet wird. Das Schwimmer-Roll-Over-Ventil 21 steht durch eine Belüftungsleitung 22 mit einem im Bereich des Eingangs zur Kraftstoffeinfüllöffnung 5 angeordnetem Roll-Over-Ventil 24 derart in Verbindung, dass ein Druckausgleich mit der Umgebung vollzogen werden kann.
Der erste Reduktionsmittelbehälter 1 ist mit dem Kraftstoffbehälter 4 durch eine erste Leitung 8 verbunden, die an ihren jeweiligen Anschlüssen an die Behälter 1,4 jeweils ein Schwimmer-Roll-Over-Ventil 12 aufweist, welches im Gasvolumen 30 des jeweiligen Behälters 1,4 angeordnet ist. Alternativ ist auch die Verwendung eines Überdruckventils oder eines Tauchrohrs mit oder ohne Flüssigkeitsfalle denkbar, wobei das Tauchrohr in das Flüssigkeitsvolumen 18,19 des jeweiligen Behälters 1,4 mündet. Durch die erste Leitung 8 ist somit ein Druckausgleich 23 zwischen erstem Reduktionsmittelbehälter 1 und Kraftstoffbehälter 4 möglich. Dadurch kann der erste Reduktionsmittelbehälter 1 zunächst in den Kraftstoffbehälter 4 belüften, welcher wiederum durch die Belüftungseinrichtung 7 in die Umgebung belüften kann.

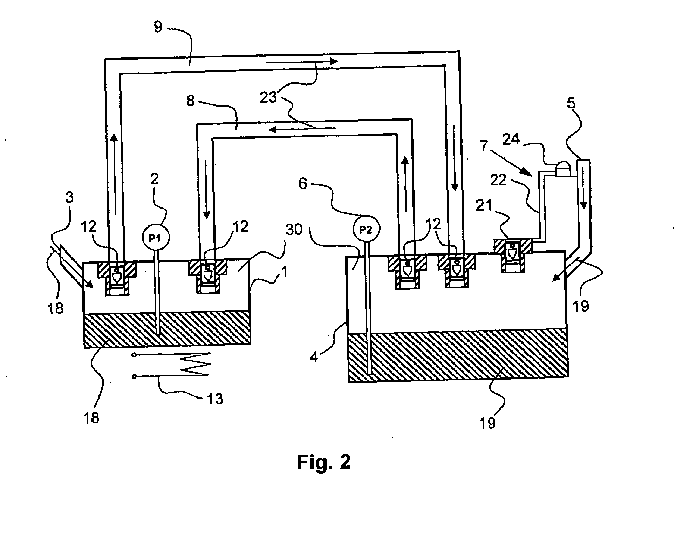

Gemäß **Fig. 2** hat eine Belüftung für einen Reduktionsmittelbehälter einen ersten Reduktionsmittelbehälter 1, der über eine erste Reduktionsmitteleinfüllöffnung 3 mit Reduktionsmittel 18, vorzugsweise mit Harnstoff befüllt werden kann. Durch eine Reduktionsmittelfördereinrichtung 2 kann Harnstoff 18 aus dem ersten Reduktionsmittelbehälter 1 zur weiteren Verwendung entnommen werden. Weiterhin verfügt der erste Reduktionsmittelbehälter 1 über eine Heizeinrichtung 13, die bei niedrigen Temperaturen ein Einfrieren des Harnstoffs 18 verhindert.
Ein Kraftstoffbehälter 1, der mit Kraftstoff 19, vorzugsweise Diesel befüllt ist, verfügt über eine Kraftstoffeinfüllöffnung 5 zum Befüllen des Kraftstoffbehälters 1 mit Diesel 19. Eine Kraftstofffördereinrichtung 6 ist zur Entnahme des Diesels 19 aus dem Kraftstoffbehälter 4 vorgesehen. Am Kraftstoffbehälter 4 ist weiterhin eine Belüftungseinrichtung 7 angeordnet, welche unter Anderem durch ein nahe am Kraftstoffbehälter 4 angeordnetes Schwimmer-Roll-Over-Ventil 21 gebildet wird. Das Schwimmer-Roll-Over-Ventil 21 steht durch eine Belüftungsleitung 22 mit einem im Bereich des Eingangs zur Kraftstoffeinfüllöffnung 5 angeordnetem Roll-Over-Ventil 24 derart in Verbindung, dass ein Druckausgleich mit der Umgebung vollzogen werden kann.
Der erste Reduktionsmittelbehälter 1 ist mit dem Kraftstoffbehälter 4 durch eine erste Leitung 8 verbunden, die an ihren jeweiligen Anschlüssen an die Behälter 1,4 jeweils ein Schwimmer-Roll-Over-Ventil 12 aufweist, welches im Gasvolumen 30 des jeweiligen Behälters 1,4 angeordnet ist. Alternativ ist auch die Verwendung eines Überdruckventils oder eines Tauchrohrs mit oder ohne Flüssigkeitsfalle denkbar, wobei das Tauchrohr in das Flüssigkeitsvolumen 18,19 des jeweiligen Behälters 1,4 mündet. Weiterhin ist der erste Reduktionsmittelbehälter 1 mit dem Kraftstoffbehälter 4 durch eine zweite Leitung 9 verbunden, die an ihren jeweiligen Anschlüssen an die Behälter 1,4 jeweils ein Schwimmer-Roll-Over-Ventil 12 aufweist. Die Schwimmer-Roll-Over-Ventile 12 sind jeweils so ausgelegt, dass ein Druckausgleich 23 für einen der Behälter 1,4 jeweils nur in einer der beiden Leitungen 8,9 in einer Richtung erfolgen kann. So ist ein Druckausgleich zwischen den beiden Behältern 1,4, und durch die Belüftungseinrichtung 7, auch mit der Umgebung gewährleistet.

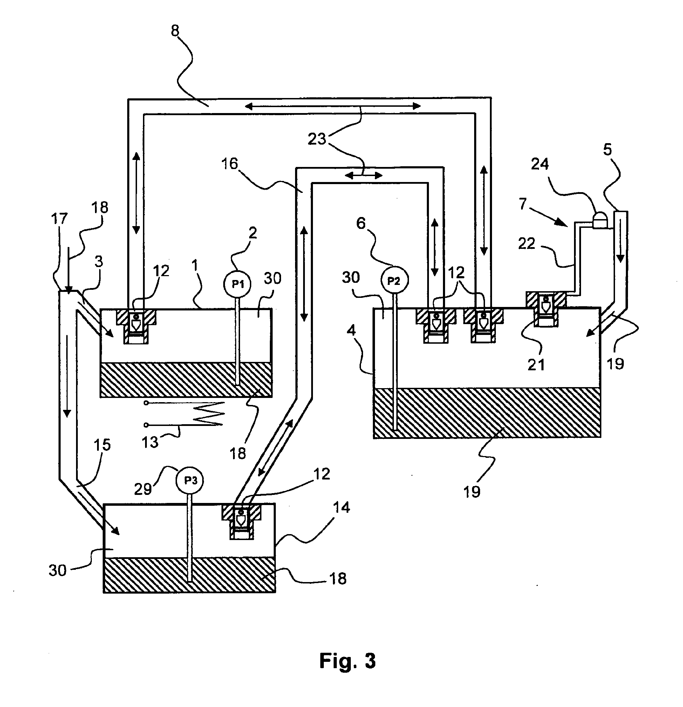

Gemäß **Fig. 3** hat eine Belüftung für einen Reduktionsmittelbehälter einen ersten Reduktionsmittelbehälter 1, der über eine erste Reduktionsmitteleinfüllöffnung 3 mit Reduktionsmittel 18, vorzugsweise mit Harnstoff befüllt werden kann. Durch eine Reduktionsmittelfördereinrichtung 2 kann Harnstoff 18 aus dem ersten Reduktionsmittelbehälter 1 zur weiteren Verwendung entnommen werden. Weiterhin verfügt der erste Reduktionsmittelbehälter 1 über eine Heizeinrichtung 13, die bei niedrigen Temperaturen ein Einfrieren des Harnstoffs 18 verhindert.
Weiterhin ist ein zweiter Reduktionsmittelbehälter 14 vorgesehen, der über eine zweite Reduktionsmitteleinfüllöffnung 15 mit Reduktionsmittel 18 befüllt werden kann und aus dem, durch eine zweite Reduktionsmittelfördereinrichtung 29, Reduktionsmittel 18 entnommen werden kann. Die beiden Reduktionsmitteleinfüllöffnungen 3 und 15 sind so miteinander verbunden, dass sie durch eine gemeinsame Öffnung 17 gleichzeitig befüllt werden können.
Darüber hinaus gibt es einen Kraftstoffbehälter 1, der mit Kraftstoff 19, vorzugsweise Diesel befüllt ist und über eine Kraftstoffeinfüllöffnung 5 zum Befüllen des Kraftstoffbehälters 1 mit Diesel 19 verfügt. Eine Kraftstofffördereinrichtung 6 ist zur Entnahme des Diesels 19 aus dem Kraftstoffbehälter 4 vorgesehen. Am Kraftstoffbehälter 4 ist weiterhin eine Belüftungseinrichtung 7 angeordnet, welche unter Anderem durch ein nahe am Kraftstoffbehälter 4 angeordnetes Schwimmer-Roll-Over-Ventil 21 gebildet wird. Das Schwimmer-Roll-Over-Ventil 21 steht durch eine Belüftungsleitung 22 mit einem im Bereich des Eingangs zur Kraftstoffeinfüllöffnung 5 angeordnetem Roll-Over-Ventil 24 derart in Verbindung, dass ein Druckausgleich und Gasaustausch mit der Umgebung vollzogen werden kann.
Der erste Reduktionsmittelbehälter 1 ist mit dem Kraftstoffbehälter 4 durch eine erste Leitung 8 verbunden, die an ihren jeweiligen Anschlüssen an die Behälter 1,4 jeweils ein Schwimmer-Roll-Over-Ventil 12 aufweist, welches im Gasvolumen 30 des jeweiligen Behälters 1,4 angeordnet ist. Alternativ ist auch die Verwendung eines Überdruckventils oder eines Tauchrohrs mit oder ohne Flüssigkeitsfalle denkbar, wobei das Tauchrohr in das Flüssigkeitsvolumen 18,19 des jeweiligen Behälters 1,4 mündet. Durch die erste Leitung 8 ist somit ein Druckausgleich 23 zwischen erstem Reduktionsmittelbehälter 1 und Kraftstoffbehälter 4 möglich. Dadurch kann der erste Reduktionsmittelbehälter 1 zunächst in den Kraftstoffbehälter 4 belüften, welcher wiederum durch die Belüftungseinrichtung 7 in die Umgebung belüften kann.
Der zweite Reduktionsmittelbehälter 14 ist mit dem Kraftstoffbehälter 4 durch eine dritte Leitung 16 verbunden, die an ihren jeweiligen Anschlüssen an die Behälter 14,4 jeweils ein Schwimmer-Roll-Over-Ventil 12 aufweist, welches im Gasvolumen 30 des jeweiligen Behälters 14,4 angeordnet ist. Alternativ ist auch die Verwendung eines Überdruckventils oder eines Tauchrohrs mit oder ohne Flüssigkeitsfalle denkbar, wobei das Tauchrohr in das Flüssigkeitsvolumen 18,19 des jeweiligen Behälters 14,4 mündet. Durch die dritte Leitung 16 ist somit ein Druckausgleich 23 zwischen zweitem Reduktionsmittelbehälter 14 und Kraftstoffbehälter 4 möglich. Dadurch kann der zweite Reduktionsmittelbehälter 14 zunächst in den Kraftstoffbehälter 4 belüften, welcher wiederum durch die Belüftungseinrichtung 7 in die Umgebung belüften kann. Durch Einsatz eines ersten 1 und eines zweiten Reduktionsmittelbehälter 14 ist es möglich ein System aus aktiven und passiven Reduktionsmittelbehälter aufzubauen, wobei der aktive Reduktionsmittelbehälter der beheizbare erste Reduktionsmittelbehälter 1 ist und der passive Reduktionsmittelbehälter der unbeheizte, zweite Reduktionsmittelbehälter 14 ist.

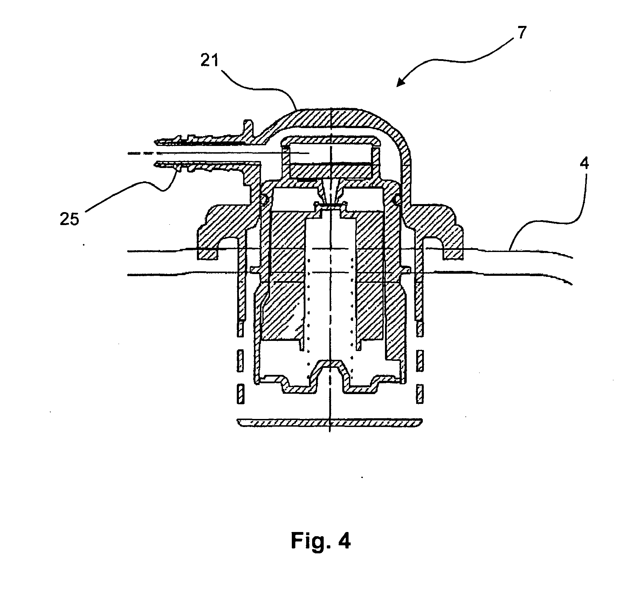

**Fig. 4** zeigt ein als Schwimmer-Roll-Over-Ventil ausgebildetes zweites Ventil 21, welches Teil der Belüftungseinrichtung 7 ist und am Kraftstoffbehälter 4 angeordnet ist. Am Ausgang des zweiten Ventils 21 ist ein Anschlussstück 25 zum Anschluss der Belüftungsleitung 22 vorgesehen. Das als Schwimmer-Roll-Over-Ventil ausgebildete zweite Ventil 21 hat die Eigenschaft, dass vom Kraftstoff 19 aus dem Kraftstoffbehälter 4 aufsteigende Gase dieses in Richtung Belüftungsleitung 22 passieren können, jedoch flüssiger Kraftstoff 19 durch ein Verschließen des zweiten Ventils 21 nicht in die Verbindungsleitung 22 gelangen kann.

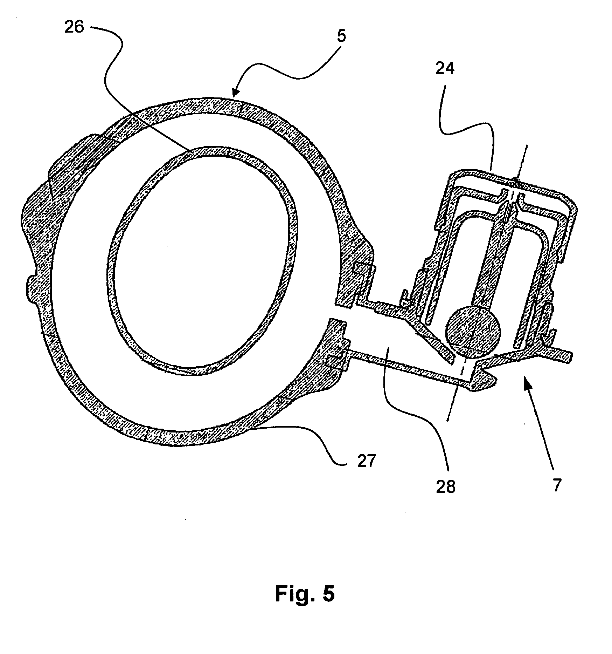

**Fig. 5** zeigt ein als Roll-Over-Ventil ausgebildetes drittes Ventil 24, welches Teil der Belüftungseinrichtung 7 ist und an der Kraftstoffeinfüllöffnung 5 angeordnet ist. Die Kraftstoffeinfüllöffnung 5 besteht hierbei aus einem Außenrohr 27, welches bis zum Kraftstoffbehälter 4 führt und einem wesentlich kürzeren Innenrohr 26, welches dazu dient, dass beim Befüllvorgang des Kraftstoffbehälters 4 kein Kraftstoff in das Roll-Over-Ventil gelangen kann. Die Belüftungsleitung 22 schließt sich an das Außenrohr 27 der Kraftstoffeinfüllöffnung 5 an. Vom Kraftstoff 19 aufsteigende Gase werden so durch das Verbindungsstück 28 zum Roll-Over-Ventil 24 geleitet und durch dieses an die Umgebung abgegeben. Das Roll-Over-Ventil 24 hat die Eigenschaft, dass es sich lediglich beim Vorliegen eines Überdrucks in der Kraftstoffeinfüllöffnung 5 öffnet und diesen ablässt.

## Patentansprüche

1. Belüftung für einen Reduktionsmittelbehälter, aufweisend
- einen ersten Reduktionsmittelbehälter (1),der mit einer ersten Reduktionsmitteleinfüllöffnung (3) versehen ist,
- einen Kraftstoffbehälter (4), der mit einer Kraftstoffeinfüllöffnung (5) und einer Belüftungseinrichtung (7) versehen ist, **gekennzeichnet, durch** eine erste Leitung (8), **durch** die der erste Reduktionsmittelbehälter (1) mit dem Kraftstoffbehälter (4) in Verbindung steht.

2. Belüftung für einen Reduktionsmittelbehälter nach Anspruch 1, **dadurch gekennzeichnet, dass** der erste Reduktionsmittelbehälter (1) eine Reduktionsmittelfördereinrichtung (2) aufweist.

3. Belüftung für einen Reduktionsmittelbehälter nach einem der Ansprüche 1 bis 2, **dadurch gekennzeichnet, dass** der Kraftstoffbehälter (4) eine Kraftstofffördereinrichtung (6) aufweist.

4. Belüftung für einen Reduktionsmittelbehälter nach einem der Ansprüche 1 bis 3, **dadurch gekennzeichnet, dass** eine zweite Leitung (9) vorgesehen ist, durch die der erste Reduktionsmittelbehälter (1) mit dem Kraftstoffbehälter (4) in Verbindung steht, wobei ein Fluidstrom (23) aus dem jeweiligen Behälter (1,4) nur eine der beiden Leitungen (8,9) passieren kann.

5. Belüftung für einen Reduktionsmittelbehälter nach einem der Ansprüche 1 bis 4, **dadurch gekennzeichnet, dass** ein zweiter Reduktionsmittelbehälter (14) angeordnet ist, welcher über eine zweite Reduktionsmitteleinfüllöffnung (15) und eine zweite Reduktionsmittelfördereinrichtung (29) verfügt und durch eine dritte Leitung (16) mit dem Kraftstoffbehälter (4) verbunden ist.

6. Belüftung für einen Reduktionsmittelbehälter nach einem der Ansprüche 1 bis 5, **dadurch gekennzeichnet, dass** die erste (8) und/oder die zweite (9) und/oder die dritte Leitung (16) über ein erstes Ventil (12) verfügt.

7. Belüftung für einen Reduktionsmittelbehälter nach Anspruch 6, **dadurch gekennzeichnet, dass** das erste Ventil (12) als Rückschlagventil ausgebildet ist.

8. Belüftung für einen Reduktionsmittelbehälter nach einem der Ansprüche 6 bis 7, **dadurch gekennzeichnet, dass** das erste Ventil (12) für Flüssigkeiten (18,19) unpassierbar, bevorzugt als Roll-Over-Ventil und besonders bevorzugt als Schwimer-Roll-Over-Ventil, ausgebildet ist.

9. Belüftung für einen Reduktionsmittelbehälter nach einem der Ansprüche 1 bis 8, **dadurch gekennzeichnet, dass** die erste (3) und die zweite Reduktionsmitteleinfüllöffnung (15) gleichzeitig befüllbar sind.

10. Belüftung für einen Reduktionsmittelbehälter nach einem der Ansprüche 1 bis 9, **dadurch gekennzeichnet, dass** die Belüftungseinrichtung (7) durch ein nahe am Kraftstoffbehälter (4) liegendes zweites Ventil (21), bevorzugt ein für Flüssigkeiten unpassierbares Ventil und besonders bevorzugt ein Schwimmer-Roll-Over-Ventil gebildet wird.

11. Belüftung für einen Reduktionsmittelbehälter nach einem der Ansprüche 1 bis 9, **dadurch gekennzeichnet, dass** die Belüftungseinrichtung (7) durch ein drittes Ventil (24), bevorzugt ein Rückschlagventil und besonders bevorzugt ein Roll-Over-Ventil gebildet wird, welches an einer Belüftungsleitung (22) angeordnet ist.

12. Belüftung für einen Reduktionsmittelbehälter nach einem der Ansprüche 1 bis 9, **dadurch gekennzeichnet, dass** die Belüftungseinrichtung (7) durch ein nahe am Kraftstoffbehälter (4) liegendes zweites Ventil (21), bevorzugt ein für Flüssigkeiten unpassierbares Ventil und besonders bevorzugt ein Schwimmer-Roll-Over-Ventil gebildet wird, welches über eine Belüftungsleitung (22) mit einem dritten Ventil (24), bevorzugt einem Rückschlagventil und besonders bevorzugt einem Roll-Over-Ventil, in Verbindung steht.

13. Belüftung für einen Reduktionsmittelbehälter nach einem der Ansprüche 1 bis 12, **dadurch gekennzeichnet, dass** an Stelle eines der ersten Ventile (12) ein Tauchrohr angeordnet ist.

14. Belüftung für einen Reduktionsmittelbehälter nach einem der Ansprüche 1 bis 13, **dadurch gekennzeichnet, dass** der erste Reduktionsmittelbehälter (1), der zweite Reduktionsmittelbehälter (14) und der Kraftstoffbehälter (4) ein Gasvolumen (30) und ein Flüssigkeitsvolumen (18,19) aufweisen.

15. Belüftung für einen Reduktionsmittelbehälter nach einem der Ansprüche 1 bis 14, **dadurch gekennzeichnet, dass** das erste Ventil (12) im Gasvolumen (30) angeordnet ist.

16. Belüftung für einen Reduktionsmittelbehälter nach einem der Ansprüche 1 bis 15, **dadurch gekennzeichnet, dass** das Tauchrohr im Flüssigkeitsvolumen (18,19) angeordnet ist.

17. Belüftung für einen Reduktionsmittelbehälter nach einem der Ansprüche 1 bis 16, **dadurch gekennzeichnet, dass** der erste Reduktionsmittelbehälter (1) über eine Heizeinrichtung (13) verfügt.

18. Belüftung für einen Reduktionsmittelbehälter nach einem der Ansprüche 1 bis 17, **dadurch gekennzeichnet, dass** der Reduktionsmittelbehälter (1) mit Harnstofflösung (18), vorzugsweise 32,5 % -iger Harnstofflösung, befüllt ist.

19. Belüftung für einen Reduktionsmittelbehälter nach einem der Ansprüche 1 bis 18, **dadurch gekennzeichnet, dass** der Kraftstoffbehälter (4) mit Diesel (19) befüllt ist.

## Claims

1. Ventilation for a reducing agent tank,
- comprising a first reducing agent tank (1) which is provided with a first reducing agent filler opening (3),
- a fuel tank (4) which is provided with a fuel filler opening (5) and a ventilation device (7),
**characterised by** a first line (8) by means of which the first reducing agent tank (1) is connected to the fuel tank (4).

2. Ventilation for a reducing agent tank according to claim 1, **characterised in that** the first reducing agent tank (1) has a reducing agent delivery device (2).

3. Ventilation for a reducing agent tank according to either claim 1 or claim 2, **characterised in that** the fuel tank (4) has a fuel delivery device (6).

4. Ventilation for a reducing agent tank according to any of claims 1 to 3, **characterised in that** a second line (9) is provided, by means of which the first reducing agent tank (1) is connected to the fuel tank (4), a fluid flow (23) from the respective tanks (1, 4) being able to pass through only one of the two lines (8, 9).

5. Ventilation for a reducing agent tank according to any of claims 1 to 4, **characterised in that** there is a second reducing agent tank (14) which has a second reducing agent filler opening (15) and a second reducing agent delivery device (29) and is connected to the fuel tank (4) by a third line (16).

6. Ventilation for a reducing agent tank according to any of claims 1 to 5, **characterised in that** the first (8) and/or the second (9) and/or the third line (16) has a first valve (12).

7. Ventilation for a reducing agent tank according to claim 6, **characterised in that** the first valve (12) is configured as a non-return valve.

8. Ventilation for a reducing agent tank according to either claim 6 or claim 7, **characterised in that** the first valve (12) is configured to be impassable to liquids (18, 19), preferably as a roll-over valve, and particularly preferably as a float roll-over valve.

9. Ventilation for a reducing agent tank according to any of claims 1 to 8, **characterised in that** the first (3) and the second reducing agent filler opening (15) can be filled at the same time.

10. Ventilation for a reducing agent tank according to any of claims 1 to 9, **characterised in that** the ventilation device (7) is formed by a second valve (21) which is located close to the fuel tank (4), preferably a valve which is impassable to liquids, and particularly preferably a float roll-over valve.

11. Ventilation for a reducing agent tank according to any of claims 1 to 9, **characterised in that** the ventilation device (7) is formed by a third valve (24), preferably a non-return valve, and particularly preferably a roll-over valve, which is arranged on a ventilation line (22).

12. Ventilation for a reducing agent tank according to any of claims 1 to 9, **characterised in that** the ventilation device (7) is formed by a second valve (21) located close to the fuel tank (4), preferably a valve which is impassable to liquids, and particularly preferably a float roll-over valve, which is connected via a ventilation line (22) to a third valve (24), preferably a non-return valve, and particularly preferably a roll-over valve.

13. Ventilation for a reducing agent tank according to any of claims 1 to 12, **characterised in that** there is an immersion tube in place of one of the first valves (12).

14. Ventilation for a reducing agent tank according to any of claims 1 to 13, **characterised in that** the first reducing agent tank (1), the second reducing agent tank (14) and the fuel tank (4) have a gas volume (30) and a liquid volume (18, 19).

15. Ventilation for a reducing agent tank according to any of claims 1 to 14, **characterised in that** the first valve (12) is arranged in the gas volume (30).

16. Ventilation for a reducing agent tank according to any of claims 1 to 15, **characterised in that** the immersion tube is arranged in the liquid volume (18, 19).

17. Ventilation for a reducing agent tank according to any of claims 1 to 16, **characterised in that** the first reducing agent tank (1) has a heating device (13).

18. Ventilation for a reducing agent tank according to any of claims 1 to 17, **characterised in that** the reducing agent tank (1) is filled with a urea solution (18), preferably a 32.5 % urea solution.

19. Ventilation for a reducing agent tank according to any of claims 1 to 18, **characterised in that** the fuel tank (4) is filled with diesel (19).

## Revendications

1. Aération pour un récipient d'agent réducteur, présentant :
- un premier récipient d'agent réducteur (1), qui est pourvu d'une première ouverture de remplissage d'agent réducteur (3),
- un récipient de carburant (4), qui est pourvu d'une ouverture de remplissage de carburant (5) et d'un dispositif d'aération (7), **caractérisée par**
une première conduite (8) par laquelle le premier récipient d'agent réducteur (1) est en communication avec le récipient de carburant (4).

2. Aération pour un récipient d'agent réducteur selon la revendication 1, **caractérisée en ce que** le premier récipient d'agent réducteur (1) présente un dispositif d'acheminement d'agent réducteur (2).

3. Aération pour un récipient d'agent réducteur selon l'une quelconque des revendications 1 à 2, **caractérisée en ce que** le récipient de carburant (4) présente un dispositif d'acheminement de carburant (6).

4. Aération pour un récipient d'agent réducteur selon l'une quelconque des revendications 1 à 3, **caractérisée en ce qu'**il est prévu une deuxième conduite (9), par laquelle le premier récipient d'agent réducteur (1) est en communication avec le récipient de carburant (4), un courant de fluide (23) provenant du récipient respectif (1, 4) pouvant passer par seulement l'une des deux conduites (8, 9).

5. Aération pour un récipient d'agent réducteur selon l'une quelconque des revendications 1 à 4, **caractérisée en ce qu'**il est agencé un second récipient d'agent réducteur (14), qui dispose d'une seconde ouverture de remplissage d'agent réducteur (15) et d'un second dispositif d'acheminement d'agent réducteur (29) et est mis en communication avec le récipient de carburant (4) via une troisième conduite (16).

6. Aération pour un récipient d'agent réducteur selon l'une quelconque des revendications 1 à 5, **caractérisée en ce que** la première (8) et/ou la deuxième (9) et/ou la troisième conduite (16) dispose(nt) d'une première soupape (12).

7. Aération pour un récipient d'agent réducteur selon la revendication 6, **caractérisée en ce que** la première soupape (12) se présente sous la forme d'une soupape de non-retour.

8. Aération pour un récipient d'agent réducteur selon l'une quelconque des revendications 6 à 7, **caractérisée en ce que** la première soupape (12) est conformée de manière à ne pas pouvoir être parcourue par des liquides (18, 19), de préférence conformée en soupape roll-over et, mieux encore, sous la forme d'une soupape roll-over à flotteur.

9. Aération pour un récipient d'agent réducteur selon l'une quelconque des revendications 1 à 8, **caractérisée en ce que** la première (3) et la seconde ouverture de remplissage d'agent réducteur (15) peuvent être simultanément remplies.

10. Aération pour un récipient d'agent réducteur selon l'une quelconque des revendications 1 à 9, **caractérisée en ce que** le dispositif d'aération (7) est formé par une deuxième soupape (21) qui se trouve à proximité du récipient de carburant (4), de préférence une soupape qui ne peut être parcourue par les liquides et, mieux encore, une soupape roll-over à flotteur.

11. Aération pour un récipient d'agent réducteur selon l'une quelconque des revendications 1 à 9, **caractérisée en ce que** le dispositif d'aération (7) est formé par une troisième soupape (24), de préférence une soupape de non-retour et, mieux encore, une soupape de type roll-over, qui est agencée sur une conduite d'aération (22).

12. Aération pour un récipient d'agent réducteur selon l'une quelconque des revendications 1 à 9, **caractérisée en ce que** le dispositif d'aération (7) est formé par une deuxième soupape (21) qui se trouve à proximité du récipient de carburant (4), de préférence une soupape qui ne peut être parcourue par des liquides et, mieux encore, une soupape de type roll-over à flotteur, qui est en communication, via une conduite d'aération (22), avec une troisième soupape (24), de préférence une soupape de non-retour et, mieux encore, une soupape de type roll-over.

13. Aération pour un récipient d'agent réducteur selon l'une quelconque des revendications 1 à 12, **caractérisée en ce qu'**un tube plongeur est monté à la place d'une des premières soupapes (12).

14. Aération pour un récipient d'agent réducteur selon l'une quelconque des revendications 1 à 13, **caractérisée en ce que** le premier récipient d'agent réducteur (1), le deuxième récipient d'agent réducteur (14) et le récipient de carburant (4) présentent un volume de gaz (30) et un volume de liquide (18, 19).

15. Aération pour un récipient d'agent réducteur selon l'une quelconque des revendications 1 à 14, **caractérisée en ce que** la première soupape (12) est aménagée dans le volume de gaz (30).

16. Aération pour un récipient d'agent réducteur selon l'une quelconque des revendications 1 à 15, **caractérisée en ce que** le tube plongeur est aménagé dans le volume de liquide (18, 19).

17. Aération pour un récipient d'agent réducteur selon l'une quelconque des revendications 1 à 16, **caractérisée en ce que** le premier récipient d'agent réducteur (1) dispose d'un dispositif de chauffage (13).

18. Aération pour un récipient d'agent réducteur selon l'une quelconque des revendications 1 à 17, **caractérisée en ce que** le récipient d'agent réducteur (1) est rempli d'une solution d'urée (18), de préférence une solution d'urée à 32,5 %.

19. Aération pour un récipient d'agent réducteur selon l'une quelconque des revendications 1 à 18, **caractérisée en ce que** le récipient de carburant (4) est rempli de carburant diesel (19).
